Europäisches Patentamt

European Patent Office

Office européen des brevets

(11) Publication number: **0 228 831 B1**

# EUROPEAN PATENT SPECIFICATION

(45) Date of publication of patent specification: **20.02.91**   (51) Int. Cl.⁵: **B01J 47/04**

(21) Application number: **86309491.8**

(22) Date of filing: **05.12.86**

(54) Process for treating a liquid involving cation exchange and selective removal of nitrate ions from the liquid, and ion exchange resin mixtures suitable for use therein.

(30) Priority: **09.12.85 GB 8530274**

(43) Date of publication of application:
**15.07.87 Bulletin 87/29**

(45) Publication of the grant of the patent:
**20.02.91 Bulletin 91/08**

(84) Designated Contracting States:
**AT BE CH DE ES FR GB IT LI NL**

(56) References cited:
**DE-A- 1 920 497**
**DE-A- 3 441 112**
**US-A- 4 479 877**

**CHEMISTRY & INDUSTRY, no. 5, 7th March
1981, pages 161-162, London, GB; M. COX et
al.: "Unusual selectivity of a commercial ion-
exchange resin with respect to nitrate ex-
change"**

(73) Proprietor: **ROHM AND HAAS COMPANY
Independence Mall West
Philadelphia Pennsylvania 19105(US)**

(72) Inventor: **Prunac, Alain Denis Louis
92 Rue de Cornouailles
F-78180 Montigny-Le-Bretonneux(FR)**
Inventor: **Baur, Daniel Michel
487 Chemin des Pertuades
F-06220 Golfe Juan(FR)**

(74) Representative: **Angell, David Whilton et al
ROHM AND HAAS (UK) LTD. European Oper-
ations Patent Department Lennig House 2
Mason's Avenue
Croydon CR9 3NB(GB)**

## Description

The present invention is concerned with a process for treating liquids, such as liquid food and/or water, using ion exchange resin mixtures and involving cation exchange and the selective removal of nitrate ions from the liquid (i.e. the removal of nitrate ions in preference to anions such as bicarbonate and/or sulphate ions). For example, the process enables the production of softened water having a level of nitrate ions which is low enough for the water to be acceptable for potable water applications and heating purposes. The term "liquid food", as used herein, refers to liquids which are intended for human consumption or are mixed with materials intended for human consumption during the production of such materials in such circumstances that impurities therein may eventually be consumed by humans.

It is known to soften water, i.e. to remove primarily calcium and magnesium hardness ions, by passing the water through a bed of cation exchange resin. However, if softened water is to be produced for potable water applications, it is important for the softened water to contain an acceptably low level of organic material leached from the resin during softening. This can be achieved, in accordance with EP-A-0225793, by softening the water with a resin mixture comprising (a) cation exchange resin and (b) only 0.5 to 20% by volume, of (a) plus (b), of acrylic and/or styrenic anion exchange resin.

Water typically contains, in addition to hardness ions, other ions such as one or more of chloride, bicarbonate, nitrate and sulphate ions. If such water containing both hardness ions and nitrate ions is to be softened and subsequently used in potable water applications or for heating purposes, it is important for the softened water to have an acceptably low level of nitrate ions. It is known to remove nitrate ions by passing water through a bed of anion exchange resin. However, it has been observed that the use of a mixture of cation and anion exchange resins to both soften and remove nitrate ions from water often suffers from the disadvantage that the anion exchange resin can also absorb bicarbonate and/or sulphate ions from the water being treated. These ions cause precipitation of calcium carbonate and/or calcium sulphate during subsequent regeneration of the resin mixture which disadvantageously may cause regeneration equipment valve blockage and/or can accumulate in the interstices of the resins thereby severely reducing the effectiveness of the resin mixture for subsequent use.

What we have now surprisingly found is that, if a cation/anion exchange resin mixture is used to soften and selectively remove nitrate ions from water and this treatment is conducted such that the anion exchange resin is loaded to at least 80% of its nitrate removal capacity, the disadvantageous precipitation of calcium carbonate and/or calcium sulphate during subsequent regeneration of the resin mixture can be avoided.

DE-A-l920497 discloses a process for regenerating a carboxyl cation exchange resin employed in conjunction with, or in a mixed bed together with, a strongly basic anion exchange resin, the regeneration being conducted with a dilute mineral acid or an acid salt solution. The cation exchange resin is stated to be useful for removing alkalinity present in water or aqueous solutions, and the anion exchange resin is stated to be useful for removing organic substances from water and for decolorising aqueous solutions.

According to the present invention there is provided a process for exchanging hardness cations and selectively removing nitrate ions from a liquid, which comprises passing the liquid through a resin bed comprising a mixture of:-
    (a) cation exchange resin; and
    (b) anion exchange resin
whereby cations and nitrate ions, present in the liquid before its passage through the resin mixture, are each independently removed or reduced to a desired level, the removal or reduction of the cations being achieved by exchange of hardness ions, and continuing the treatment of the liquid until resin (b) is loaded with nitrate ions to at least 80%, preferably at least 90% and most preferably at least 95%, of its nitrate removal capacity, and wherein the resin mixture is at least initially regenerated with chloride salt.

As used herein in connection with the present invention, the references to exchanging hardness ions refers to the exchange of cations between the cation exchange resin and the liquid being treated whereby hardness ions, i.e. primarily calcium and/or magnesium ions, are either absorbed from the liquid by the resin or are released by the resin into the liquid. In the former case therefore the hardness cations comprise the cations removed from, or reduced in level in, the liquid being treated, and in the latter case the hardness ions comprise the cations which are exchanged with the cations being removed from, or reduced in level in, the liquid being treated.

Resin (a) may comprise weakly and/or strongly acidic cation exchange resin. Further, resin (a) may comprise gel-type and/or macroreticular (otherwise known as macroporous)-type cation exchange resin. Suitable strongly acidic cation exchange resins include styrene/divinylbenzene resins, for example, the styrene/divinylbenzene resins having sulphonic functionality and being in the $Na^+$ form such as Amberlite 200, Amberlite 252 and Duolite C26, which are macroreticular-type resins, and Amberlite IR-120, Amberlite IR-122, Amberlite IR-132, Duolite C20 and Duolite C206, which are gel-type resins. Suitable weakly acidic cation exchange resins include methacrylic/divinylbenzene resins having carboxyl functionality and being in the $Na^+$ form such as Amberlite DP1, which is a macroreticular-type resin.

Resin (b) may comprise gel-type and/or macroreticular-type anion exchange resin Further, resin (b) may comprise strongly and/or weakly basic anion exchange resin. Suitable anion exchange resins include acrylic and styrenic resins. Suitable strongly basic anion exchange resins include styrene/divinylbenzene resins, for example, the styrene/divinylbenzene resins having quaternary ammonium functionality and being in the chloride form such as Amberlite IRA-458 and Amberlite IRA-400, which are gel-type resins having trimethylammonium functionality and Duolite ES196, which has triethylammonium functionality. Suitable weakly basic anion exchange resins include styrenic, acrylic and alkyl polycondensate resins which may be gel- or macroreticular-type resins and may have primary, secondary or tertiary amine functionality. Examples of such weakly basic anion exchange resins are Amberlite IR-935P (styrene/divinylbenzene macroreticular-type resin with tertiary amine functionality and being in the free base form), Amberlite IRA-67 (acrylic gel-type resin with tertiary amine functionality and in the free base form) and Duolite A30B (alkyl polycondensate gel-type resin with tertiary amine functionality and in the free base form).

If the liquid, e.g. water, to be treated in accordance with the invention contains both nitrate and sulphate ions and the sulphate ion concentration of the liquid is higher than its nitrate content, then resin (b) must have a higher affinity for nitrate ions than for sulphate ions, as measured under normal conditions of use, to avoid sulphate ion absorption by the resin which can lead to precipitation problems during regeneration of the resin mixture. Examples of such anion exchange resins are macroreticular and gel-type strong base anion exchange resins having triethylammonium functionality and being in the chloride form, the resins being acrylic and/or styrene/divinylbenzene resins, preferably styrene/divinylbenzene resins.

However, if the sulphate ion concentration of the liquid, e.g. water to be treated is no higher than its nitrate ion content, then the relative affinity of resin (b) for nitrate and sulphate ions is not important and resin (b) may comprise any of the anionic resins just mentioned in connection with the treatment of high sulphate content liquid or anionic resins having a lower affinity for nitrate ions than for sulphate ions, the latter including gel-type and macroreticular-type strong base anion exchange resins which can be either acrylic or styrene/divinylbenzene resins having trimethylammonium functionality and being in the chloride form or styrene/divinylbenzene resins having dimethylethanolamine functionality and being in the chloride form.

The resin bed used in the present invention may, for example, contain from 10 to 90, preferably from 30 to 70, percent by volume of anion exchange resin, based on the total volume of resins (a) and (b) in the bed.

The volume of the cation exchange resin to be used in the resin mixture should be determined based on the composition of the liquid, e.g. water, to be treated. Preferably, the volume of the cation exchange resin is such that, after treatment of the liquid with the resin mixture, cations have been removed by the cation exchange resin and there can be achieved in the liquid a residual concentration of such cations of at least 0.01 meq/l, more preferably at least 0.1 meq/l, and of no more than 0.5 meq/l, more preferably no more than 0.2 meq/l. When the liquid to be treated is water, the cations to be removed by the cation exchange resin are typically hardness cations.

The volume of the anion exchange resin to be used in the resin mixture is determined based on the nitrate ion concentration of the liquid to be treated so as to exhaust the anion exchange resin to at least 80%, preferably at least 90% and most preferably at least 95%, of its maximum nitrate removal capacity.

If water is to be treated in accordance with the present invention, then the level of nitrate ions in the treated water may be reduced to a level no higher than 50 mg $NO_3^-$/l of water, preferably no higher than 25 mg $NO_3^-$/l of water.

Resin (b) is preferably used in the loading cycle in the chloride form. It is, however, not necessary for resin (b) to be wholly in the chloride form as it is a requirement of the invention that this resin, after loading, is at least initially regenerated with chloride. If the resin is to be used in a form other than the wholly chloride form, then it can, after the initial regeneration with chloride, be converted into the appropriate form, e.g. partially chloride or non-chloride form.

The use of a resin bed according to the present invention to both soften water and selectively remove nitrate ions from water has the added advantage that it enables the production of softened water in which the level of organic material leaching from the resin bed into the water is sufficiently low to allow the softened water to be acceptable for potable water applications.

The present invention will now be further illustrated by way of the following Examples which are for illustrative purposes only and are not to be construed as imposing any limitation on the scope of the invention.

Example 1 :-

100 ml of a 70% by volume Amberlite IR-120 and 30% by volume Amberlite IRA-400 resin mixture were placed in a 25 mm internal diameter glass column. Water having the following composition was then passed downwardly through the column at a flow rate of 2 l/h:

```
Total hardness            :   3.8 milliequivalents per litre
(80% as calcium ions)
Sodium                    :   2.1        "        "        "
Bicarbonate               :   3.8        "        "        "
Chloride                  :   0.4        "        "        "
Sulphate                  :   0.2        "        "        "
Nitrate                   :   1.5        "        "        "
```

After passage of 24 litres of water through the column, the normal hardness ion removal capacity of the Amberlite IR-120 had been reached and the nitrate ion content of the treated water exiting the column was almost equal to the nitrate ion content of the feed water, the latter indicating that the nitrate ion removal capacity of the Amberlite IRA-400 had almost been reached.

The passage of water through the column was then stopped and the average nitrate content of the 24 litres of treated water was observed to be 16.5 mg $NO_3^-$/litre of water, which is lower than the guide level of Directive 80/778/EEC relating to the quality of water intended for human consumption (maximum level is 50 mg $NO_3^-$/l of water and recommended level is 25 mg $NO_3^-$/l of water), and the residual hardness of the treated water was observed to be below 0.1 milliquivalent/litre of water.

The resin mixture was then regenerated in the column by passing downwardly through the resin mixture 170 ml of aqueous NaCl solution having a concentration of 100 g NaCl/litre of water and then 200 ml of deionized water for rinsing. The regenerant effluent from the column was collected in 30 ml fractions and no precipitate was observed in any of the fractions.

Comparative Example A :-

Example 1 was repeated except that the resin mixture was replaced with 100 ml of a 50% by volume Amberlite IR-120 and 50% by volume Amberlite IRA-400 resin mixture and only 17.1 litre of the water was passed through the column. After passage of the water through the column, the normal hardness ion removal capacity of the Amberlite IR-120 had been reached but the Amberlite IRA-400 was loaded with nitrate ions to less than 80% of its nitrate removal capacity.

The resin mixture was then regenerated in the column by passing downwardly through the resin mixture 120 ml of aqueous NaCl solution having a concentration of 100 g NaCl/litre of water and then 200 ml of deionized water. The regenerant effluent from the column was then collected in 30 ml fractions and a precipitate of calcium carbonate was clearly observed in the third to sixth fractions collected.

Example 2 :-

100 ml of a 70% by volume Amberlite IR-120 and 30% by volume Duolite ES-196 resin mixture was placed in a 25 mm internal diameter glass column. Water having the following composition was then passed downwardly through the column at a flow rate of 2 l/h:-

| Total hardness (80% as calcium ions) | : | 3.8 | milliequivalents per litre | | |
|---|---|---|---|---|---|
| Sodium | : | 3.4 | " | " | " |
| Bicarbonate | : | 3.8 | " | " | " |
| Chloride | : | 0.4 | " | " | " |
| Sulphate | : | 2.0 | " | " | " |
| Nitrate | : | 1.0 | " | " | " |

After passage of 24 litres of water through the column, the normal hardness ion removal capacity of the Amberlite IR-120 had been reached and the nitrate ion content of the treated water exiting the column was almost equal to the nitrate ion content of the feed water, the latter indicating that the total nitrate removal capacity of the Duolite ES-196 had almost been reached.

The passage of water through the column was then stopped and the average nitrate ion content of the treated water was observed to be 12 mg/litre of water, which is below the guide level value of the EEC Directive mentioned in Example 1, and the residual hardness of the treated water was observed to be below 0.1 milliequivalents/litre of water.

The resin mixture was then regenerated in the column by passing downwardly through the column 170 ml of aqueous NaCl solution having a concentration of 100 g NaCl/litre of water. 200 ml of deionized water were then passed downwardly through the column for rinsing. The regenerant effluents were collected in separate 30 ml fractions and no precipitate was observed in any of the fractions.

Comparative Example B :-

Example 2 was repeated except that the resin mixture was replaced by 100 ml of a 70% by volume Amberlite IR-120 and 30% by volume Amberlite IRA-400 resin mixture. After passage of 24 litres of the water through the column, the normal hardness ion removal capacity of the Amberlite IR-120 had been reached and the nitrate ion content of the treated water exiting the column was almost equal to the nitrate ion content of the feed water, the latter indicating that the total nitrate removal capacity of the Amberlite IRA-400 had almost been reached.

The average nitrate ion concentration of the 24 litres of water, after passage through the column, was observed to be 14 mg $NO_3^-$/litre of water, which is below the guide level of the EEC Directive mentioned in Example 1.

Regeneration of the resin mixture as in Example 1 resulted in a precipitate of calcium sulphate being clearly observed in the third to seventh fraction of regenerant effluent collected.

Comparative Example C :-

Example 2 was repeated except that the resin mixture was replaced with 100 ml of a 50% by volume Amberlite IR-120 and 50% by volume Duolite ES-196 resin mixture and only 17.1 litres of water were passed through the column. After the passage of the water through the column, the normal hardness ion removal capacity of the Amberlite IR-120 had been reached but the Duolite ES-196 was loaded with nitrate ions to less than 80% of its nitrate ion removal capacity.

The resin mixture was then regenerated in the column by passing downwardly through the column 120 ml of aqueous NaCl solution having a concentration of 100 g of NaCl/litre of water and then 200 ml of deionized water. The regenerant effluent from the column was collected in 30 ml fractions and a precipitate of calcium sulphate was clearly observed in the third to sixth fractions collected.

Examples 1 and 2 are Examples in accordance with the present invention and illustrate that precipitation problems during regeneration of the resin mixture can be avoided if the loading cycle of the resin mixture is such that, at the end of the cycle, the anion exchange resin is loaded with $NO_3^-$ ions to greater than 80% of its nitrate ion removal capacity. In this connection, Comparative Examples A and C clearly illustrate that precipitation problems occur during regeneration of the resin mixture if the loading cycle is such that the anion exchange resin is only loaded with nitrate ions to less than 80% of its nitrate ion removal capacity.

In Comparative Example B a resin mixture containing an anion exchange resin (Amberlite IRA-400) having a higher affinity for sulphate ions than for nitrate ions is used to treat water having a concentration of sulphate ions higher than that of the nitrate ions. During regeneration problems occur as calcium sulphate is precipitated. This Example, therefore, clearly illustrates that, when treating such water (i.e. wherein the $SO_4^-$ concentration is higher than the $NO_3^-$ concentration) an anion exchange resin having a higher affinity for sulphate ions than for nitrate ions should not be used if precipitation problems during regeneration of the resin mixture are to be avoided.

"Amberlite" is a trademark of Rohm and Haas Company and "Duolite" is a trademark of Duolite International S.A.

## Claims

1. A process for exchanging hardness cations and selectively removing nitrate ions from a liquid, in which cations and nitrate ions originally present in the liquid are independently removed or reduced to a desired level by passing the liquid through a resin bed comprising a mixture of (a) cation exchange resin, and (b) anion exchange resin, and then at least initially regenerating the resin bed with chloride salt, wherein the anion exchange resin has a higher affinity for nitrate than sulphate if the liquid contains an excess of sulphate over nitrate ions, and the relative volumes of cation and anion exchange resin are such that at the stage where the cations and nitrate ions in the liquid have each been removed or reduced to the desired level, the anion exchange resin is loaded to at least 80% of its nitrate removal capacity.

2. A process as claimed in claim 1, wherein resin (a) comprises styrene/divinylbenzene having sulfonic functionality and being in the $Na^+$ form and/or methacrylic/divinylbenzene resin having carboxyl functionality and being in the $Na^+$ form.

3. A process as claimed in claim 1 or claim 2, wherein resin (b) comprises styrene/divinylbenzene resin having quaternary ammonium functionality and being in the chloride form and/or styrenic, acrylic or alkyl polycondensate resin having primary, secondary or tertiary amine functionality.

4. A process as claimed in any preceding claim, wherein the resin bed comprises from 10 to 90 percent by volume of resin (b), based on the total volume of resins (a) plus (b) in the bed.

5. A process as claimed in any preceding claim, wherein the treatment is continued until resin (b) is loaded with nitrate ions to at least 90%, especially at least 95%, of its nitrate removal capacity.

6. A process as claimed in any preceding claim, wherein the liquid is water and the cations, present in the liquid before its passage through the resin bed and removed or reduced to a desired level during the treatment of the liquid, are hardness cations.

## Revendications

1. Procédé pour échanger des cations responsables de la dureté et pour enlever sélectivement des ions nitrate d'un liquide , dans lequel des cations et des ions nitrate, présents à l'origine dans le liquide sont , indépendamment, enlevés ou réduits à un niveau voulu par le passage du liquide à travers un lit de résine comprenant un mélange de (a) une résine d'échange de cations, et de (b) une résine d'échange d'anions , puis au moins initialement régénération du lit de résine par du sel de type chlorure, dans lequel la résine d'échange d'anions a une plus grande affinité pour du nitrate que du sulfate si le liquide contient un excès d'ions sulfate par rapport à des ions nitrate, et les volumes relatifs de la résine d'échange de cations et d'échange d'anions sont tels qu'au stade où les cations et les ions nitrate présents dans le liquide ont chacun été enlevés ou réduits au niveau voulu, la résine d'échange d'anions est chargée à au moins 80 % de sa capacité d'enlèvement de nitrate .

2. Procédé tel que revendiqué à la revendication 1 , dans lequel la résine (a) comprend du styrène/divinylbenzène ayant de la fonctionnalité sulfonique et étant sous la forme Na⁺ et/ou une résine méthacrylique/ divinylbenzène ayant de la fonctionnalité carboxyle et étant sous la forme Na⁺ .

3. Procédé tel que revendiqué à la revendication 1 ou à la revendication 2 , dans lequel la résine (b) comprend une résine de styrène / divinylbenzène ayant une fonctionnalité ammonium quaternaire et étant sous forme chlorure et/ou de la résine de polycondensat styrénique, acrylique ou d'alkyle ayant une fonctionnalité amine primaire,secondaire ou tertiaire .

4. Procédé tel que revendiqué dans l'une quelconque des revendications précédentes dans lequel le lit de résine comprend de 10 à 90 % en volume de résine (b) ,sur la base du volume total des résines (a) plus (b) dans le lit.

5. Procédé tel que revendiqué dans l'une quelconque des revendications précédentes, dans lequel le traitement est poursuivi jusqu'à ce que la résine (b) soit chargée d'ions nitrate à 90 % au moins,en particulier à 95 % au moins,de sa capacité d'enlevement des ions nitrate.

6. Procédé tel que revendiqué dans l'une quelconque des revendications précédentes,dans lequel le liquide est l'eau et les cations,présents dans le liquide avant son passage à travers le lit de résine et l'enlèvement ou la réduction à un niveau voulu pendant le traitement du liquide, sont des cations responsables de la dureté.


## Ansprüche

1. Verfahren zum Austausch von Härtekationen und zur selektiven Entfernung von Nitrationen aus einer Flüssigkeit, in welcher Kationen und Nitrationen, die ursprünglich in der Flüssigkeit vorhanden waren, unabhängig voneinander entfernt oder auf einen gewünschten Gehalt verringert werden, durch Durchschicken der Flüssigkeit durch ein Harzbett aus einer Mischung aus (a) einem Kationenaustauscherharz und (b) einem Anionenaustauscherharz, woraus wenigstens anfänglich das Harzbett mit einem Chloridsalz regeneriert wird, wobei das Anionenaustauscherharz eine höhere Affinität für Nitrat als Sulfat hat, wenn die Flüssigkeit einen Überschuß an Sulfationen gegenüber Nitrationen aufweist, und wobei die relativen Volumina von Kationen- und Anionenaustauscherharz derartig sind, daß zu der Stufe, an welcher die Kationen und Nitrationen in der Flüssigkeit jeweils entfernt oder auf den gewünschten Gehalt verringert worden sind, das Anionenaustauscherharz zu wenigstens 80 % seiner Nitratentfernungskapazität beladen ist.

2. Verfahren nach Anspruch 1, wobei das Harz (a) aus einem Styrol/Divinylbenzol-Harz mit einer Sulfonfunktionalität, das in der Na⁺-Form vorliegt, und/oder aus einem Methacryl/Divinylbenzol-Harz mit einer Carboxylfunktionalität, das in der Na⁺-Form vorliegt, besteht.

3. Verfahren nach Anspruch 1 oder 2, wobei das Harz (b) aus einem Styrol/Divinylbenzol-Harz mit einer quaternären Ammoniumfunktionalität, das in der Chloridform vorliegt, und/oder aus einem Styrol-, Acryl- oder Alkylpolykondensatharz mit einer primären, sekundären oder tertiären Aminfunktionalität besteht.

4. Verfahren nach einem der vorherigen Ansprüche, wobei das Harzbett zu 10 bis 90 Volumenprozent aus dem Harz (b), bezogen auf das Gesamtvolumen der Harze (a) + (b) in dem Bett, besteht.

5. Verfahren nach einem der vorherigen Ansprüche, wobei die Behandlung fortgesetzt wird bis das Harz (b) mit den Nitrationen mindestens 90 %, insbesondere mindestens 95 %, seiner Nitratentfernungskapazität beladen ist.

6. Verfahren nach einem der vorherigen Ansprüche, wobei die Flüssigkeit aus Wasser besteht und die Kationen, die in der Flüssigkeit vor dem Durchschicken durch das Harzbett vorliegen und entfernt oder auf einen gewünschten Gehalt während der Behandlung der Flüssigkeit verringert werden sollen, Härtekationen sind.